# EUROPEAN PATENT APPLICATION

(11) **EP 4 682 516 A1**
(43) Date of publication of application: **21.01.2026**
(21) Application number: 25188038.1
(22) Date of filing: 08.07.2025
(51) Int. Cl.: G01N 23/04, G01V 5/22

(54) **X-RAY INSPECTION DEVICE**

(30) Priority: 19.07.2024 JP 2024116160
(71) Applicant: Ishida Co., Ltd., Kyoto-shi Kyoto 606-8392 (JP)
(72) Inventor: YURUGI, Futoshi, Ritto-shi, Shiga 520-3026 (JP); HIROSE, Osamu, Ritto-shi, Shiga 520-3026 (JP); TOMINAGA, Kota, Ritto-shi, Shiga 520-3026 (JP)
(74) Representative: Global IP Europe Patentanwaltskanzlei

(57) **Abstract**

[Problem]To provide an X-ray inspection device (1) that can perform inspection regardless of a conveyance speed of an article (G).

[Solving method]An X-ray inspection device (1) includes: a conveying unit (5) that conveys an article (G); an X-ray irradiation unit (6) that irradiates the article (G) conveyed by the conveying unit (5) with X-rays; a sensor unit (7) in which a plurality of detecting elements (10) that detect the X-rays are arranged in a plurality of columns in a crossing direction horizontally intersecting a conveying direction (A) in the conveying unit (5); an image generation unit (22) that generates an image based on a detection result output from the sensor unit (7); and an inspection unit (23) that inspects quality of the article (G) based on the image. The sensor unit (7) outputs an integrated value of output values of first detecting elements (11) in a plurality of first columns (C1) and an integrated value of output values of second detecting elements (12) in a plurality of second columns (C2) when a conveyance speed of the conveying unit (5) is lower than a predetermined speed, and outputs an integrated value of the output values of the first detecting elements (11) in the plurality of first columns (C1) and the output values of the second detecting elements (12) in the plurality of second columns (C2) when the conveyance speed of the conveying unit (5) is the predetermined speed or higher.

## Description

### Technical Field

The present invention relates to an X-ray inspection device.

### Background Art

Patent Literature Document 1 discloses an X-ray inspection device including electromagnetic wave irradiation means configured to irradiate an inspection subject with a predetermined electromagnetic wave, conveyance means configured to convey the inspection subject placed on a conveyance surface in a Y-axis direction, and electromagnetic wave detection means in which detecting element groups each including M (M is an integer of 2 or more) detecting elements arranged in the Y-axis direction are arranged in N rows (N is an integer of 2 or more) in an X-axis direction orthogonal to the Y-axis direction.

### Citation List

### Patent Literature

Patent Literature Document 1: JP 6454820 B

### Summary of Invention

### Technical Problem

In the X-ray inspection device, in order to improve production efficiency in a production line or the like of articles to be inspected, a conveyance speed of the articles (inspection subjects) may be increased. In the X-ray inspection device, if the volume of an image generated based on a detection result of X-rays is large when the conveyance speed of the articles is high, transfer of the image cannot be completed within an inspection time, and inspection based on the image cannot be performed.

One aspect of the present invention is intended to provide an X-ray inspection device that can perform inspection regardless of a conveyance speed of articles.

### Solution to Problem

(1) An X-ray inspection device according to one aspect of the present invention includes: a conveying unit configured to convey an article; an X-ray irradiation unit configured to irradiate the article conveyed by the conveying unit with X-rays; an X-ray detection unit in which a plurality of detecting elements configured to detect the X-rays are arranged in a plurality of columns in a crossing direction horizontally intersecting a conveying direction in the conveying unit; an image generation unit configured to generate an image based on a detection result output from the X-ray detection unit; and an inspection unit configured to inspect quality of the article based on the image. The plurality of detecting elements include: first detecting elements arranged in a first column; and second detecting elements arranged in a second column parallel to the first column. A plurality of the first columns and a plurality of the second columns are each provided alternately along the conveying direction. The X-ray detection unit outputs an integrated value of output values of the first detecting elements in the plurality of first columns and an integrated value of output values of the second detecting elements in the plurality of second columns when a conveyance speed of the conveying unit is lower than a predetermined speed, and outputs an integrated value of the output values of the first detecting elements in the plurality of first columns and the output values of the second detecting elements in the plurality of second columns when the conveyance speed of the conveying unit is the predetermined speed or higher.

In the X-ray inspection device according to one aspect of the present invention, when the conveyance speed of the conveying unit is lower than the predetermined speed, the X-ray detection unit outputs the integrated value of the output values of the first detecting elements in the plurality of first columns and the integrated value of the output values of the second detecting elements in the plurality of second columns, and when the conveyance speed of the conveying unit is the predetermined speed or higher, the X-ray detection unit outputs the integrated value of the output values of the first detecting elements in the plurality of first columns and the output values of the second detecting elements in the plurality of second columns. As described above, the X-ray inspection device outputs, when the conveyance speed of the conveying unit is the predetermined speed or higher, two output values of the output values of the first detecting elements of the plurality of first columns and the output values of the second detecting elements of the plurality of second columns as one integrated value (data). Therefore, one image is generated in the image generation unit. Accordingly, in the X-ray inspection device, the volume of the image can be reduced compared to a case where two images are generated based on two integrated values. Therefore, in the X-ray inspection device, even when the conveyance speed of the conveying unit is high, the image can be transferred from the image generation unit to the inspection unit within the inspection time. As a result, in the X-ray inspection device, inspection can be performed regardless of the conveyance speed of the article.

(2) In the X-ray inspection device according to the above (1), the second detecting elements may include a plurality of second detecting element groups each constituted by the second detecting elements adjacent to each of the plurality of detecting elements in the first detecting elements and arranged adjacent to each other in the crossing direction, and an output value of each of the plurality of second detecting element groups may be an output value obtained after performing arithmetic processing on the output values of the second detecting elements constituting each of the plurality of second detecting element groups.

(3) In the X-ray inspection device according to the above (1) or (2), the image generation unit may change a number of columns of the plurality of detecting elements used in generating the image based on the conveyance speed of the conveying unit. In the X-ray inspection device, for example, when the conveyance speed of the conveying unit is high, the number of columns of the detecting elements used in generating the image is reduced. Accordingly, in the X-ray inspection device, since the number of columns of the detecting elements is reduced, the volume of the image generated based on the integration result of the output values of the detecting elements in the X-ray detection unit can be reduced. Therefore, in the X-ray inspection device, even when the conveyance speed of the conveying unit is high, the image can be transferred from the image generation unit to the inspection unit within the inspection time. As a result, in the X-ray inspection device, inspection can be performed regardless of the conveyance speed of the article.

(4) In the X-ray inspection device according to any one of the above (1) to (3), a number of the second detecting elements arranged in the second column may be larger than a number of the first detecting elements arranged in the first column. In this configuration, the second detecting element is smaller than the first detecting element, and foreign matter passing through the X-ray detection unit is easily detected by the plurality of second detecting elements in the second column. Therefore, the X-ray inspection device is less likely to miss detecting foreign matter. In addition, since the X-ray detection unit includes both the first detecting elements and the second detecting elements, an increase in the manufacturing cost of the X-ray detection unit is mitigated as compared with the case where the X-ray detection unit includes only the second detecting elements.

(5) In the X-ray inspection device according to any one of the above (1) to (4), the image may include a first image generated by using a detection result of each of the first detecting elements and a second image generated by using a detection result of each of the second detecting elements. In this configuration, the contrast of the image generated by the image generation unit can be improved.

(6) In the X-ray inspection device according to the above (5), the image may be a composite image obtained by synthesizing the first image and the second image. In this configuration, the difference between the brightness, contrast, and the like of the first image and those of the second image can be decreased.

(7) In the X-ray inspection device according to any one of the above (1) to (6), a length of each of the first detecting elements in the crossing direction may be longer than a length of each of the second detecting elements in the crossing direction. In this configuration, it becomes difficult for foreign matter to go undetected.

### Advantageous Effects of Invention

According to one aspect of the present invention, inspection can be performed regardless of the conveyance speed of the article.

### Brief Description of Drawings

FIG. 1 is a configuration diagram illustrating an X-ray inspection device according to an embodiment.
FIG. 2 is a schematic configuration diagram of the interior of a shield box illustrated in FIG. 1.
FIG. 3 is a schematic plan view of a main part of a sensor unit.
FIG. 4 is a functional configuration diagram of a control unit.
FIG. 5(a) is a schematic plan view illustrating a first example of a second detecting element group of a plurality of second detecting elements. FIG. 5(b) is a schematic plan view illustrating a second example of a second detecting element group of a plurality of second detecting elements.

### Description of Embodiments

A preferred embodiment of the present invention will be described below in detail with reference to the attached drawings. Note that, in the description of the drawings, like or equivalent elements are denoted by the same reference signs and redundant descriptions thereof will be omitted.

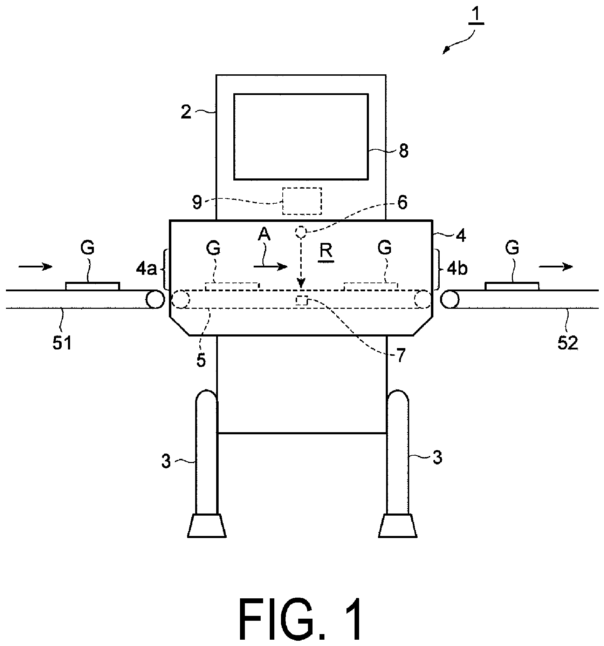

As illustrated in FIG. 1, an X-ray inspection device 1 includes a device main body 2, support legs 3, a shield box 4, a conveying unit 5, an X-ray irradiation unit 6, a sensor unit (an X-ray detection unit) 7, a display operation unit 8, and a control unit 9. The X-ray inspection device 1 generates an X-ray transmission image of an article G while conveying the article G, and inspects the article G based on the X-ray transmission image. The article G before inspection is carried into the X-ray inspection device 1 by a carry-in conveyor 51. The article G after inspection is carried out from the X-ray inspection device 1 by a carry-out conveyor 52.

The device main body 2 accommodates the control unit 9 and the like. The support legs 3 support the device main body 2. The shield box 4 is provided on the device main body 2. The shield box 4 is a housing for preventing leakage of X-rays (electromagnetic waves) to the outside. In the shield box 4, an inspection chamber R is provided in which inspection of the article G by X-rays is performed. A carry-in port 4a and a carry-out port 4b are formed in the shield box 4. The article G before the inspection is carried into the inspection chamber R from the carry-in conveyor 51 through the carry-in port 4a. The article G after the inspection is conveyed from the inspection chamber R to the carry-out conveyor 52 through the carry-out port 4b.

The conveying unit 5 is a member for conveying the article G and is arranged to pass through the center of the shield box 4. The conveying unit 5 conveys the article G along a conveying direction A from the carry-in port 4a through the inspection chamber R to the carry-out port 4b. The speed (conveyance speed) at which the article G is conveyed by the conveying unit 5 is set by the control unit 9, for example. The conveying unit 5 is, for example, a belt conveyor that is stretched between the carry-in port 4a and the carry-out port 4b. The conveying unit 5 may protrude outward from the carry-in port 4a and the carry-out port 4b.

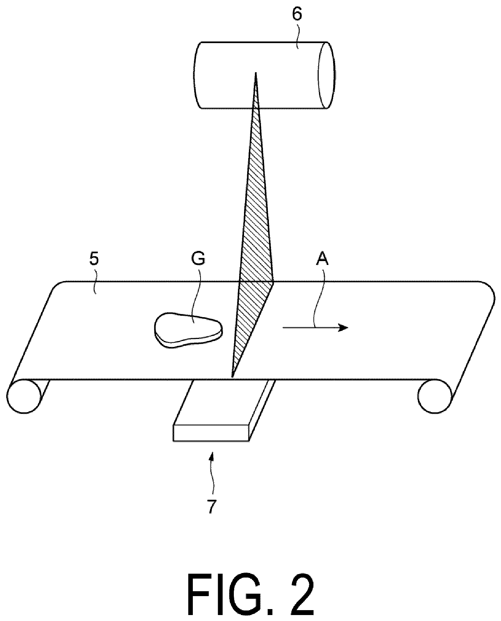

As illustrated in FIGS. 1 and 2, the X-ray irradiation unit 6 is an electromagnetic wave irradiation unit arranged in the shield box 4, and irradiates the article G conveyed by the conveying unit 5 with X-rays. The X-rays include X-rays of various energy regions from low energy (long wavelength) to high energy (short wavelength). Thus, the X-ray irradiation unit 6 irradiates the article G conveyed to the conveying unit 5 with X-rays of a plurality of energy regions. After the activation of the X-ray inspection device 1 and before the inspection of the article G, the X-ray irradiation unit 6 may perform irradiation of X-rays (i.e., idling of the X-ray irradiation unit 6). Note that the above-described "low" and "high" in the low energy and high energy represent "low" and "high" relatively among the plurality of energy regions irradiated from the X-ray irradiation unit 6, and do not represent a specific range. The power (in particular, current) supplied to the X-ray irradiation unit 6 can be changed manually or automatically. By changing the power, the output of the X-ray irradiated to the article G can be changed. Thus, the X-ray having an appropriate intensity for the article G can be irradiated.

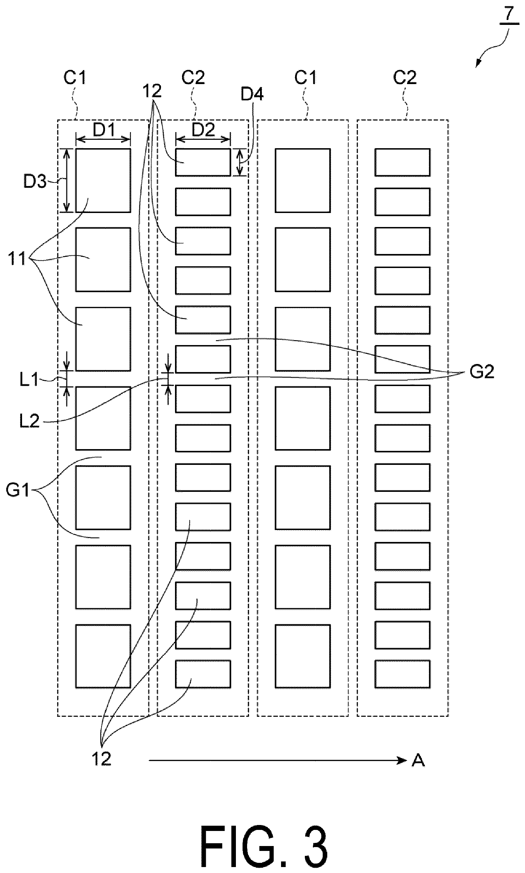

The sensor unit 7 is a sensor unit that detects the electromagnetic waves. The sensor unit 7 is arranged in the shield box 4 at a position facing the X-ray irradiation unit 6 in the vertical direction. The conveying unit 5 is located between the sensor unit 7 and the X-ray irradiation unit 6 in the vertical direction. FIG. 3 is a schematic plan view of a main part of the sensor unit 7. As illustrated in FIG. 3, the sensor unit 7 includes a plurality of detecting elements 10 that detect X-rays and are arranged in a planar (two-dimensional) shape. The detecting elements 10 are arranged at least in a direction (crossing direction) that intersects the conveying direction A of the conveying unit 5.

In the present embodiment, the sensor unit 7 is a direct conversion type detection unit that can detect X-rays by a photon counting method. The detecting element 10 is, for example, a sensor (multi-energy sensor) for detecting X-rays in each of the plurality of energy regions transmitted through the article G, and the sensor unit 7 may be a Time Delay Integration sensor (TDI sensor). The detecting element 10 includes, for example, a photon detection type sensor such as a CdTe semiconductor detector. In the detecting element 10, for example, an electron-hole pair is generated when an X-ray photon arrives. Counting processing of photons (photon counting) is performed based on the energy (photon energy) obtained at this time. The counting processing is performed by, for example, a calculation unit (not illustrated) included in the sensor unit 7 or the detecting element 10. The result of the counting processing (detection result) of each detecting element 10 by the calculation unit is output to the control unit 9 at predetermined time intervals, for example. The predetermined time is a time (default time) predetermined by the X-ray inspection device 1. The predetermined time interval described above is also referred to as a read interval or a delay time, and can be appropriately changed by the control unit 9.

Each detecting element 10 of the sensor unit 7 may discriminate the detected photon energy of X-rays into 2 or more energy regions based on any threshold. In this case, the sensor unit 7 can perform photon counting in each energy region. The any threshold is, for example, one or more values (units: keV) set by the control unit 9.

The plurality of detecting elements 10 include first detecting elements 11 arranged in a first column C1 in the crossing direction, and second detecting elements 12 arranged in a second column C2 parallel to the first column C1. Thus, a plurality of first detecting elements 11 are arranged in the first column C1 along the crossing direction, and a plurality of second detecting elements 12 are arranged in the second column C2 along the crossing direction. In the sensor unit 7, a plurality of first columns C1 and a plurality of second column C2 are each provided alternately along the conveying direction A. In other words, the plurality of first columns C1 and the plurality of second columns C2 are set in the sensor unit 7, and a first column C1 and a second column C2 are arranged alternately in the conveying direction A. Therefore, the first detecting element 11 and the second detecting element 12 are arranged alternately in the conveying direction A. Each of the first column C1 and the second column C2 may function as a pseudo-line sensor, for example. Although two first columns C1 and two second columns C2 are illustrated in FIG. 3, three or more first columns C1 and three or more second columns C2 may be provided.

In the present embodiment, a dimension D1 of the first detecting element 11 in the conveying direction A is the same as, but is not limited to, a dimension D2 of the second detecting element 12 in the conveying direction A. A dimension D3 of the first detecting element 11 in the crossing direction is different from a dimension D4 of the second detecting element 12 in the crossing direction. In the present embodiment, the dimension D3 is greater than the dimension D4. For example, the dimension D3 is a natural number multiple of 2 or more of the dimension D4. The dimension D1 and the dimension D3 are preferably, for example, 1.0 mm or less, and more preferably 0.1 mm to 0.9 mm. The dimension D1 and the dimension D3 are most preferably, for example, 0.3 mm. The dimension D2 and the dimension D4 are preferably 1.0 mm or less, and more preferably 0.1 mm to 0.9 mm.

When the number of first detecting elements 11 in the first column C1 and the number of second detecting elements 12 in the second column C2 are the same, the brightness, contrast, or the like of an image generated by using the detection result output from the second column C2 may be significantly different from an image generated by using the detection result output from the first column C1. Therefore, in the present embodiment, the number of second detecting elements 12 arranged in the second column C2 is greater than the number of first detecting elements 11 arranged in the first column C1. For example, the number of second detecting elements 12 arranged in the second column C2 is a natural number multiple of 2 or more of the number of first detecting elements 11 arranged in the first column C1. Alternatively, the value obtained by dividing the number of second detecting elements 12 arranged in the second column C2 by the number of first detecting elements 11 arranged in the first column C1 may be the same as the value obtained by dividing the dimension D3 by the dimension D4.

A dimension L1 of a clearance G1 between the first detecting elements 11 in the crossing direction may be the same as or different from a dimension L2 of a clearance G2 between the second detecting elements 12 in the crossing direction. In the present embodiment, the dimension L1 is greater than the dimension L2. In this case, as seen along the conveying direction A, a part of the second detecting element 12 overlaps with the clearance G1. For example, parts of two adjacent second detecting elements 12 overlap with the clearance G1 as seen along the conveying direction A. Thus, foreign matter can pass through one or the plurality of the second detecting elements 12 even when passing only through the clearance G1. Alternatively, a part of the second detecting element 12 may overlap with the clearance G1 as seen in the conveying direction A even when the dimensions L1 and L2 are the same. In other words, the first detecting element 11 may overlap with the plurality of second detecting elements 12 in the conveying direction A regardless of the relationship between the dimensions L1 and L2.

When the conveyance speed of the conveying unit 5 is lower than a predetermined speed, the sensor unit 7 outputs an integrated value of output values of the first detecting elements 11 in the plurality of first columns C1 and an integrated value of output values of the second detecting elements 12 in the plurality of second columns C2. When the conveyance speed of the conveying unit 5 is the predetermined speed or higher, the sensor unit 7 outputs an integrated value of the output values of the first detecting elements 11 in the plurality of first columns C1 and the output values of the second detecting elements 12 in the plurality of second columns C2. The sensor unit 7 acquires the conveyance speed of the conveying unit 5 input in the display operation unit 8. The predetermined speed can be set by an operator via the display operation unit 8.

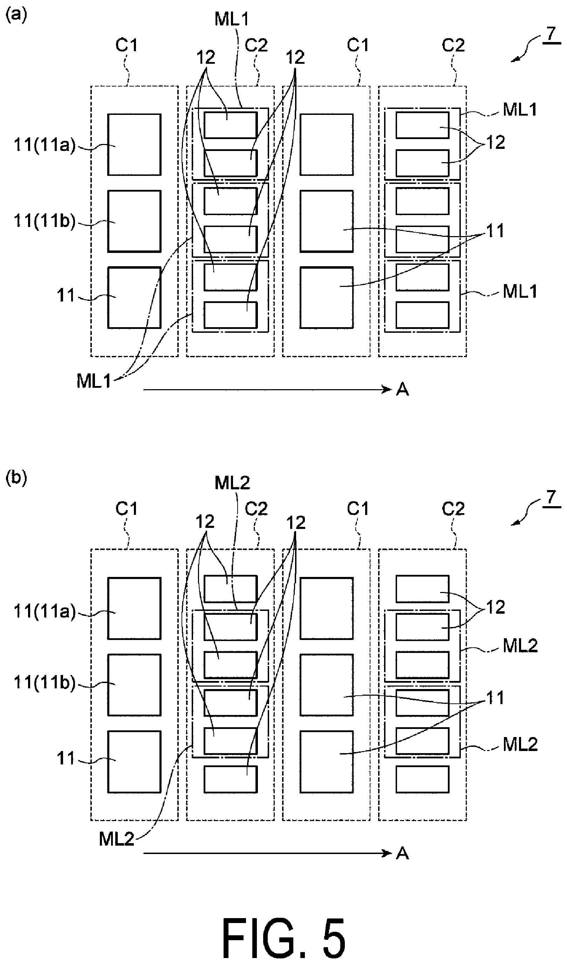

As illustrated in FIG. 5(a) or FIG. 5(b), the second detecting elements 12 include a plurality of second detecting element groups ML1 and ML2 each constituted by the plurality of second detecting elements 12 adjacent to each of the detecting elements in the first detecting elements 11 and arranged adjacent to each other in the crossing direction. The output values of the second detecting element groups ML1 and ML2 may be output values obtained by performing arithmetic processing on the output values of the plurality of second detecting elements 12 constituting the second detecting element groups ML1 and ML2. For example, a total value or a mean value of the output values of the plurality of second detecting elements 12 constituting the second detecting element groups ML1 and ML2 is used as the output values of the second detecting element groups ML1 and ML2. The output values of the second detecting element groups ML1 and ML2 are used when the conveyance speed of the conveying unit 5 is the predetermined speed or higher, but are not limited thereto, and may be used when the conveyance speed of the conveying unit 5 is lower than the predetermined speed.

As illustrated in FIG. 1, the display operation unit 8 is a member (display unit) provided on the device main body 2. The display operation unit 8 displays a variety of information and receives input operations of a variety of conditions from the outside. The display operation unit 8 is, for example, a liquid crystal display and displays an operation screen as a touch panel. In this case, the operator can input a variety of conditions via the display operation unit 8. For example, the operator can set the conveyance speed of the conveying unit 5, the power (at least one of current or voltage) supplied to the X-ray irradiation unit 6, or the like via the display operation unit 8. The input operation received by the display operation unit 8 is output to the conveying unit 5, the sensor unit 7, the control unit 9, or the like.

The control unit 9 is disposed inside the device main body 2. The control unit 9 controls the operation of each unit of the X-ray inspection device 1. The control unit 9 includes a central processing unit (CPU), a read only memory (ROM), and a random access memory (RAM). The ROM stores a program for controlling the X-ray inspection device 1, an operation mode of the X-ray inspection device 1, or the like.

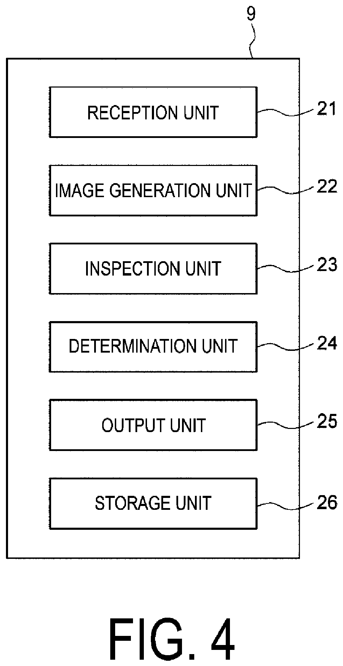

FIG. 4 is a functional configuration diagram of the control unit. As illustrated in FIG. 4, the control unit 9 includes a reception unit 21, an image generation unit 22, an inspection unit 23, a determination unit 24, an output unit 25, and a storage unit 26.

The reception unit 21 receives an input operation received by the display operation unit 8. The reception unit 21 receives, for example, the conveyance speed of the conveying unit 5, or the like set via the display operation unit 8. The reception unit 21 receives the detection result (specifically, detection results of X-rays output from each detecting element 10) output from the sensor unit 7. The reception unit 21 transmits the received detection results to the image generation unit 22.

The image generation unit 22 mainly includes, for example, a graphics processing unit (GPU), and generates an image based on the detection results output from the sensor unit 7. For example, the image generation unit 22 develops signals of the received detection results into a two-dimensional image on a memory. The memory in which the two-dimensional image is developed is, for example, a memory included in the GPU, but is not limited thereto. For example, the image generation unit 22 reads the detection results output from at least a part of the plurality of detecting elements 10 included in the sensor unit 7 at a predetermined read interval, and generates one or a plurality of time-delay integral images used for inspecting the article G. For example, a plurality of transmission images respectively corresponding to the plurality of energy regions are generated by the image generation unit 22. The image generation unit 22 may generate one or a plurality of difference images from the plurality of transmission images.

The image generation unit 22 may use, for example, an image processing algorithm or a program automatically set by machine learning. The image processing algorithm includes one image processing filter or a combination of a plurality of image processing filters. At least one or more of the plurality of image processing algorithms can be automatically generated from the plurality of image processing filters based on the specifications, inspection conditions, or the like of the X-ray inspection device 1 by employing genetic algorithms (GA), which are methods applying the mechanism of heredity and evolution in the biological world.

At least a part of the plurality of image processing algorithms can also be appropriately set by the operator via the display operation unit 8. The program automatically set by machine learning is a predictive model (trained model) generated by machine learning, and an inference program in which parameters (trained parameters) obtained to be a result of machine learning are incorporated. Examples of machine learning used in the trained model include neural networks, support vector machines, genetic algorithms, and the like.

The image generated by the image generation unit 22 may include an image (a first image) generated by using the detection results of the first detecting elements 11 and an image (a second image) generated by using the detection results of the second detecting elements 12. In this case, the image generation unit 22 generates the first image by using the detection results output from each first column C1 of the sensor unit 7, and generates the second image by using the detection results output from each second column C2 of the sensor unit 7. The image generation unit 22 may generate a composite image obtained by synthesizing the first image and the second image.

One pixel (first pixel) included in the first image is generated, for example, by using the detection result of the first detecting element 11 located at a predetermined position in one or the plurality of first columns C1. The first detecting element 11 located at the predetermined position refers to the first detecting element 11 located at a predetermined position counted from one end of the first column C1 in the crossing direction. When the detecting element 10 is a TDI sensor, the first pixel is generated by using the detection result of the first detecting element 11 located at the predetermined position in each first column C1.

One pixel (second pixel) included in the second image is generated, for example, by using the detection results of the plurality of second detecting elements 12 located at predetermined positions in one or the plurality of second columns C2. In other words, the second pixel is generated by summing the detection results of two or more second detecting elements 12 in one or the plurality of second columns C2 and using the summation result. When the detecting element 10 is a TDI sensor, the second pixel is generated by using the summation result of the detection results of the plurality of second detecting elements 12 in each second column C2. The image generation unit 22 may generate a difference image from the first image and the second image.

The image generation unit 22 changes the number of columns of the detecting elements 10 used in generating an image based on the conveyance speed of the conveying unit 5. Specifically, the image generation unit 22 changes the number of columns of the first columns C1 and the second columns C2 used in generating the image based on the conveyance speed of the conveying unit 5. When the conveyance speed of the conveying unit 5 is low, the image generation unit 22 uses a large number of columns of the first columns C1 and the second columns C2 in generating the image. When the conveyance speed of the conveying unit 5 is high, the image generation unit 22 uses a small number of columns of the first columns C1 and the second columns C2 in generating the image. For example, when the conveyance speed of the conveying unit 5 is high, the image generation unit 22 generates an image by using only the detection results of the plurality of first columns C1. When the conveyance speed of the conveying unit 5 is even higher, the image generation unit 22 generates an image by using only the detection results of some of the first columns C1 of the plurality of first columns C1.

For example, the image generation unit 22 acquires the conveyance speed of the conveying unit 5 received by the reception unit 21, and refers to a table based on the acquired conveyance speed. In the table, the conveyance speed is associated with the number of columns of the first columns C1 and the second columns C2 to be used. The table is set and stored in advance. The table can be changed as appropriate. The image generation unit 22 refers to the table based on the conveyance speed and acquires the number of columns corresponding to (associated with) the conveyance speed. The number of columns of the first columns C1 and the second columns C2 that are used by the image generation unit 22 may be freely changed by the operator. In this case, the operator operates the display operation unit 8 to set the number of columns of the first columns C1 and the second columns C2. Specifically, the conveyance speed of the conveying unit 5 is displayed on the display operation unit 8, and the operator confirms the conveyance speed and sets (designates) the number of columns of the first columns C1 and the second columns C2 on the display operation unit 8.

The inspection unit 23 inspects the article G based on the image generated by the image generation unit 22. For example, the inspection unit 23 inspects the article G by using the plurality of transmission images, the difference images, or the like. The inspection unit 23 may inspect the article G based on both the difference image and the transmission image. During the generation of the difference image by the image generation unit 22, the inspection of the article G based on the transmission image or the like may be performed. The inspection unit 23, for example, inspects the article G for whether foreign matter is present or whether a chip/crack is present, but is not limited to this. In the case where the article G is wrapped in a sheet-like packaging material or the like, the inspection unit 23 can also inspect a break of the packaging material, a seal failure of the packaging material (seal bite), or the like. In the case where the article G is housed in a package or the like, the inspection unit 23 can perform foreign matter confirmation inspection, a missing part confirmation inspection, a housing number confirmation inspection, a cavity confirmation inspection, or the like, in the package. The inspection unit 23 transmits the inspection result of the article G to the determination unit 24 and the storage unit 26.

The determination unit 24 determines whether the article G is a non-defective article based on the inspection result received from the inspection unit 23. For example, the determination unit 24 determines presence or absence of foreign matter in the article G, presence or absence of a chip/crack of the article G, or the like. The determination unit 24 transmits the determination result to the output unit 25 and the storage unit 26.

The output unit 25 outputs the determination result of the determination unit 24 to at least one of a part other than the control unit 9 in the X-ray inspection device 1 or a device different from the X-ray inspection device 1. Accordingly, at least one of the X-ray inspection device 1 or a device different from the X-ray inspection device 1 (e.g., a sorting device located downstream from the X-ray inspection device 1) can perform an operation when the article G is defective. Other examples of the above-mentioned devices different from the X-ray inspection device 1 include, for example, the carry-in conveyor 51, the carry-out conveyor 52, a notification device, and the like.

The storage unit 26 stores signals, data, or the like generated by the control unit 9. For example, the storage unit 26 stores the detection results transmitted from the reception unit 21, the image data transmitted from the image generation unit 22, the data related to the inspection results transmitted from the inspection unit 23, and the data related to the determination results transmitted from the determination unit 24.

As described above, in the X-ray inspection device 1 according to the present embodiment, the sensor unit 7 outputs the integrated value of the output values of the first detecting elements 11 in the plurality of first columns C1 and the integrated value of the output values of the second detecting elements 12 in the plurality of second columns C2, respectively, when the conveyance speed of the conveying unit 5 is lower than the predetermined speed, and the sensor unit 7 outputs the integrated value of the output values of the first detecting elements 11 in the plurality of first columns C1 and the output values of the second detecting elements 12 in the plurality of second columns C2 when the conveyance speed of the conveying unit 5 is the predetermined speed or higher. When the conveyance speed of the conveying unit 5 is high, the image generation unit 22 generates two images based on the respective outputs of the integrated value of the output values of the first detecting elements 11 in the plurality of first columns C1 and the integrated value of the output values of the second detecting elements 12 in the plurality of second columns C2 and the two images are to be transferred from the image generation unit 22 to the inspection unit 23. In such a case, the volume of the images is large, and thus the images cannot be transferred from the image generation unit 22 to the inspection unit 23 within the inspection time, and it may not be possible to perform inspection in the inspection unit 23.

In this regard, in the X-ray inspection device 1, the sensor unit 7 outputs two output values of the output values of the first detecting elements 11 of the plurality of first columns C1 and the output values of the second detecting elements 12 of the plurality of second columns C2 as one integrated value (data) to the control unit 9 (the image generation unit 22) when the conveyance speed of the conveying unit 5 is the predetermined speed or higher. As described above, in the X-ray inspection device 1, the two output values of the output values of the first detecting elements 11 in the plurality of first columns C1 and the output values of the second detecting elements 12 in the plurality of second columns C2 are output as one integrated value (data) when the conveyance speed of the conveying unit 5 is the predetermined speed or higher, and thus one image is generated in the image generation unit 22. Consequently, in the X-ray inspection device 1, the volume of the image can be reduced compared to a case where two images are generated based on two integrated values. Therefore, in the X-ray inspection device 1, the image can be transferred from the image generation unit 22 to the inspection unit 23 within the inspection time even when the conveyance speed of the conveying unit 5 is high. As a result, in the X-ray inspection device 1, inspection can be performed regardless of the conveyance speed of the article G.

In the X-ray inspection device 1 according to the present embodiment, the image generation unit 22 changes the number of columns of the detecting elements 10 used in generating an image based on the conveyance speed of the conveying unit 5. In the X-ray inspection device 1, for example, the number of columns of the detecting elements 10 used in generating an image is reduced when the conveyance speed of the conveying unit 5 is high. Thus, in the X-ray inspection device 1, the number of columns of the detecting elements 10 is reduced, and therefore the volume of the image generated based on the integration result of the output values of the detecting elements 10 in the sensor unit 7 can be reduced. Therefore, in the X-ray inspection device 1, the image can be transferred from the image generation unit 22 to the inspection unit 23 within the inspection time even when the conveyance speed of the conveying unit 5 is high. As a result, in the X-ray inspection device 1, inspection can be performed regardless of the conveyance speed of the article G.

In the X-ray inspection device 1 according to the present embodiment, the plurality of detecting elements 10 include the first detecting elements 11 arranged in the first column C1 and the second detecting elements 12 arranged in the second column C2 parallel to the first column C1. The number of second detecting elements 12 arranged in the second column C2 is greater than the number of first detecting elements 11 arranged in the first column C1. In this configuration, the second detecting element 12 is smaller than the first detecting element 11, and foreign matter passing through the sensor unit 7 is easily detected by the plurality of second detecting elements 12 in the second column C2. Therefore, the X-ray inspection device 1 is less likely to miss detecting foreign matter. In addition, the sensor unit 7 includes both the first detecting elements 11 and the second detecting elements 12, and thus an increase in the manufacturing cost of the sensor unit 7 is mitigated as compared with the case where the sensor unit 7 includes only the second detecting elements 12.

Although an embodiment of the present invention has been described above, the present invention is not necessarily limited to the above-described embodiment, and various modifications can be made without departing from the gist of the present invention.

In the above-described embodiment, a mode in which the plurality of detecting elements 10 of the sensor unit 7 include the first detecting elements 11 and the second detecting elements 12 having different sizes are described as an example. However, the detecting elements may all be the same size and type.

In the above-described embodiment, the sensor unit is a device that can detect X-rays by a photon counting method, but is not limited to this. The detecting element included in the sensor unit may include at least a scintillator and a photodiode.

In the above-described embodiment, the second pixel is generated by using the result of the summation of the detection results of two second detecting elements, but the present invention is not limited thereto. For example, the second pixel may be generated by using the result of the summation of the detection results of three or more second detecting elements. In this case, a part of a plurality of second detecting elements used in generating the second pixel is aligned with the third detecting element in the conveying direction, and the others of the plurality of second detecting elements is aligned with the fourth detecting element in the conveying direction.

### Reference Signs List

1... X-ray inspection device, 5... Conveying unit, 6... X-ray irradiation unit, 7... Sensor unit (X-ray detection unit), 10... Detecting element, 11... First detecting element, 12... Second detecting element, 22... Image generation unit, 23... Inspection unit, A... Conveying direction, C1...First column, C2... Second column, G... Article, ML1, ML2... Second detecting element group

## Claims

1. An X-ray inspection device (1), comprising:
a conveying unit (5) configured to convey an article (G);
an X-ray irradiation unit (6) configured to irradiate the article (G) conveyed by the conveying unit (5) with X-rays;
an X-ray detection unit (7) in which a plurality of detecting elements (10) configured to detect the X-rays are arranged in a plurality of columns in a crossing direction horizontally intersecting a conveying direction (A) in the conveying unit (5);
an image generation unit (22) configured to generate an image based on a detection result output from the X-ray detection unit (7); and
an inspection unit (23) configured to inspect quality of the article (G) based on the image,
wherein
the plurality of columns include a plurality of first columns (C1) and a plurality of second columns (C2) which are each provided alternately along the conveying direction (A), the plurality of first columns (C1) and a plurality of second columns (C2) being parallel to each other,
the plurality of detecting elements (10) include:
first detecting elements (11) arranged in each of the first columns (C1); and
second detecting elements (12) arranged in each of the second columns (C2), and the X-ray detection unit (7) is configured to:
output an integrated value of output values of the first detecting elements (11) in the plurality of first columns (C1) and an integrated value of output values of the second detecting elements (12) in the plurality of second columns (C2) in a case where a conveyance speed of the conveying unit (5) is lower than a predetermined speed, and
output an integrated value of the output values of the first detecting elements (11) in the plurality of first columns (C1) and the output values of the second detecting elements (12) in the plurality of second columns (C2) in a case where the conveyance speed of the conveying unit (5) is the predetermined speed or higher.

2. The X-ray inspection device (1) according to claim 1, wherein
each of the second columns (C2) includes a plurality of second detecting element groups (ML1, ML2),
each of the second detecting element groups (ML1, ML2) having the second detecting elements (12) and being adjacent to one of the plurality of detecting elements (10) in the adjacent first column (C1), and
the second detection element groups (ML1, ML2) in the same second column being arranged adjacent to each other in the crossing direction.

3. The X-ray inspection device (1) according to claim 2, wherein
an output value of each of the plurality of second detecting element groups (ML1, ML2) is an output value obtained by arithmetic processing on the output values of the second detecting elements (12) forming that second detecting element group.

4. The X-ray inspection device (1) according to claim 1, 2 or 3, wherein the image generation unit (22) is configured to change a number of columns of the plurality of detecting elements (10) used in generating the image based on the conveyance speed of the conveying unit (5).

5. The X-ray inspection device (1) according to any one of the claims 1 to 4, wherein a number of the second detecting elements (12) arranged in the second column (C2) is larger than a number of the first detecting elements (11) arranged in the first column (C1).

6. The X-ray inspection device (1) according to any one of the claims 1 to 5, wherein
the image generation unit (22) is further configured to generate the image which includes a first image generated by using a detection result of each of the first detecting elements (11) and a second image generated by using a detection result of each of the second detecting elements (12).

7. The X-ray inspection device (1) according to claim 6, wherein
the image generation unit (22) is further configured to generate the image which is a composite image obtained by synthesizing the first image and the second image.

8. The X-ray inspection device (1) according to any one of the claims 1 to 7, wherein a length of each of the first detecting elements (11) in the crossing direction is longer than a length of each of the second detecting elements (12) in the crossing direction.
